# EUROPEAN PATENT APPLICATION

(11) **EP 4 651 283 A1**
(43) Date of publication of application: **19.11.2025**
(21) Application number: 24836343.4
(22) Date of filing: 03.07.2024
(51) Int. Cl.: H01M 50/24, H01M 50/325, H01M 50/30, H01M 50/211, H01M 50/249

(54) **BATTERY PACK AND VEHICLE INCLUDING SAME**

(30) Priority: 05.07.2023 KR 20230087250
(71) Applicant: LG Energy Solution, Ltd., Seoul 07335 (KR)
(72) Inventor: JUNG, Ki-Taek, Daejeon 34122 (KR)
(74) Representative: Plasseraud IP
(86) International application number: PCT/KR2024/009425
(87) International publication number: WO 2025/009896

(57) **Abstract**

A battery pack according to the present disclosure may include: a plurality of battery modules; and a pack case having an accommodation space formed to accommodate the plurality of battery modules, wherein the pack case may be configured such that at least one surface of the pack case is deformed when internal pressure increases due to venting gas and flame generated due to a thermal event in the battery module.

## Description

### TECHNICAL FIELD

The present disclosure relates to a battery pack and, more specifically, to a battery pack in which the inner space of a pack case increases in response to internal pressure increased when a thermal event occurs in a battery module, thereby lowering the internal pressure of the battery pack, reducing a rate of increase in internal pressure, and delaying thermal propagation. The present application claims priority to Korean Patent Application No. 10-2023-0087250 filed on July 05, 2023 in the Republic of Korea, the disclosures of which are incorporated herein by reference.

### BACKGROUND ART

Semi-permanent batteries that convert electrical energy into chemical energy and can be repeatedly charged and discharged are called secondary batteries distinguished from primary batteries that cannot be reused after use.

In particular, lithium-ion secondary batteries have advantages such as high energy storage density, lightweight and miniaturized structures, excellent safety, a low discharge rate, and a long lifespan, so they are widely used as electric vehicle batteries nowadays. For reference, lithium-ion secondary batteries are generally classified into cylindrical, prismatic, and pouch types depending on their manufacturing forms, and their uses range from electric vehicle batteries to ESS (Energy Storage System) batteries and other electrical devices.

Currently, the operating voltage of one lithium-ion secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. In addition, since the battery pack, which is an assembly of secondary batteries, has a structure in which the secondary batteries are intensively stored inside a pack case, it may be vulnerable to thermal events.

Accordingly, if a specific battery module overheats or if a thermal event such as thermal runaway occurs, the internal pressure inside the battery pack may increase due to venting gas and flame generated in the battery module where the event occurs, thereby accelerating the accumulation of thermal energy, which may easily lead to thermal propagation to adjacent battery modules. This may lead to a problem of serial thermal runaway of battery modules and explosion of the entire battery pack.

Accordingly, it is necessary to improve the structure of the battery pack capable of lowering the internal pressure inside the battery pack, which is increased due to venting gas and flame generated in the case of thermal events in the initially ignited battery module, and effectively distributing the thermal energy, thereby delaying the chain thermal propagation to neighboring battery modules.

### DISCLOSURE

### Technical Problem

The present disclosure has been designed to solve the problems of the related art, and therefore the present disclosure is directed to providing a battery pack capable of lowering the internal pressure inside the battery pack, which is increased due to venting gas and flame generated in the case of thermal events in the initially ignited battery module, or reducing the rate of increase in the internal pressure, and effectively distributing the thermal energy, thereby delaying the chain thermal propagation to neighboring battery modules.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery modules; and a pack case having an accommodation space formed to accommodate the plurality of battery modules, wherein the pack case may be configured such that at least one surface of the pack case is deformed when internal pressure increases due to venting gas and flame generated due to a thermal event in the battery module.

The pack case may have an expansion space formed to be separate from the accommodation space in response to an increase in the internal pressure.

The expansion space may be formed by deformation of a bottom surface of the pack case.

The pack case may include: a pack frame configured to have upper and lower openings and accommodate the battery modules therein; and a lower frame portion disposed at a bottom of the pack frame to support the plurality of battery modules seated thereon.

The lower frame portion may include: a base plate coupled to the pack frame and configured to support the battery modules; and a bottom cover disposed on the bottom surface of the pack case so as to cover the base plate.

The bottom cover may be configured to be plastically deformed and swell downward from the pack case when the internal pressure increases.

The bottom cover may be made of steel or SUS.

The bottom cover may be configured to have a thickness of 1.6 mm to 2.5 mm.

The base plate may have a plurality of lower venting holes through which the venting gas and solid discharges including electrode discharges move to the expansion space.

The battery modules may be arranged in a width direction and a longitudinal direction inside the accommodation space of the pack case, and the plurality of lower venting holes may be arranged parallel to the width direction.

One or more lower venting holes may be disposed for each of the plurality of battery modules.

The lower frame portion may further include a bottom reinforcement bar provided between the bottom of the base plate and the bottom cover, and the plurality of lower venting holes may be formed so as not to interfere with the bottom reinforcement bar.

A heat-resistant/fire-resistant gasket may be interposed between the base plate and the bottom cover.

The heat-resistant/fire-resistant gasket may be provided along outer perimeters of the base plate and the bottom cover.

The pack frame may have a plurality of venting valves provided along a width direction of the battery module.

The venting valve may be configured to operate when the internal pressure reaches a preset pressure or more after the bottom cover is deformed to form the expansion space.

The solid discharges may be collected, together with the venting gas, in the expansion space through the lower venting hole, and the venting valve is configured to discharge only the venting gas.

**In** another embodiment, the expansion space may be formed by deformation of a top surface and a bottom surface of the pack case, and an expansion space formed by deformation of the top surface of the pack case and an expansion space formed by deformation of the bottom surface of the pack case may communicate with each other through the lower venting hole.

The pack case may further include a top cover disposed on the top of the pack frame so as to seal the accommodation space in which the battery modules are accommodated, and the bottom cover may be configured to be plastically deformed and swell downward from the pack case when the internal pressure increases, and the top cover may be configured to be plastically deformed and swell upward from the pack case when the internal pressure increases.

In addition, according to the present disclosure, there is provided a vehicle including one or more battery packs described above.

### Advantageous Effects

According to one aspect of the present disclosure, when venting gas and flames are generated due to a thermal event occurring in the battery module that initially ignites, additional expansion space may be formed in response to the internal pressure increased according thereto, thereby lowering the internal pressure of the battery pack or reducing the increase rate of internal pressure. Accordingly, the thermal energy may be effectively dispersed inside the battery pack, thereby delaying the chain thermal propagation to neighboring battery modules and preventing explosion of the entire battery pack.

In addition, according to one aspect of the present disclosure, solid discharges including electrode discharges may be collected and separated in the additional expansion space formed at the bottom of the battery pack, and only venting gas may be discharged to the outside of the pack case, thereby minimizing the clogging of the venting valve.

In addition, according to another aspect of the present disclosure, the top cover may also be plastically deformed in response to the increase in the internal pressure of the battery pack, thereby forming additional expansion space, so that the internal pressure of the battery pack may be further lowered or the increase rate of internal pressure may be further reduced.

The effects obtainable from the present disclosure are not limited to the above-mentioned effects, and other effects not mentioned above will be clearly understood by those skilled in the art to which the present disclosure pertains from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of the entire battery pack according to an embodiment of the present disclosure.
FIG. 2 is an exploded perspective view of primary components of the battery pack in FIG. 1.
FIG. 3 is a schematically cross-sectional view of a battery pack according to an embodiment of the present disclosure.
FIG. 4 is an exploded perspective view of a lower frame portion of the battery pack in FIG. 2.
FIG. 5 is a top view of a battery pack from which a top cover is removed according to an embodiment of the present disclosure.
FIG. 6 is a bottom view of a battery pack from which a bottom cover is removed according to an embodiment of the present disclosure.
FIG. 7 is an enlarged cross-sectional view of a battery pack according to an embodiment of the present disclosure.
FIG. 8 is a schematic diagram illustrating a state in which a bottom cover is deformed in a battery pack according to an embodiment of the present disclosure.
FIG. 9 is a schematic diagram illustrating a state in which venting gas is discharged through a venting valve in a battery pack according to an embodiment of the present disclosure.
FIG. 10 is a schematically cross-sectional view of a battery pack according to another embodiment of the present disclosure.
FIG. 11 is a diagram illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

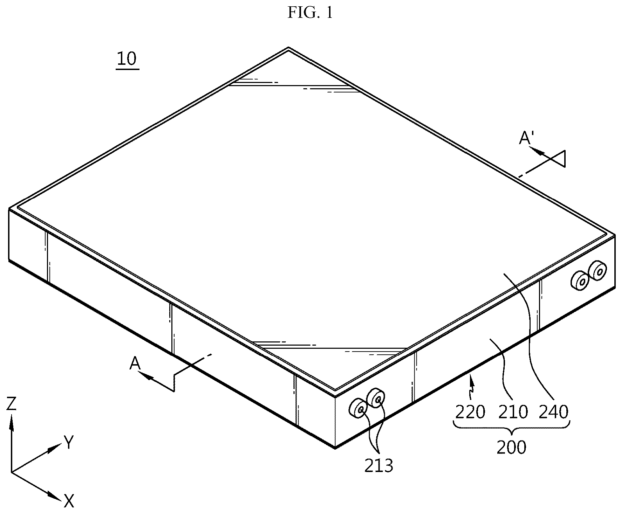

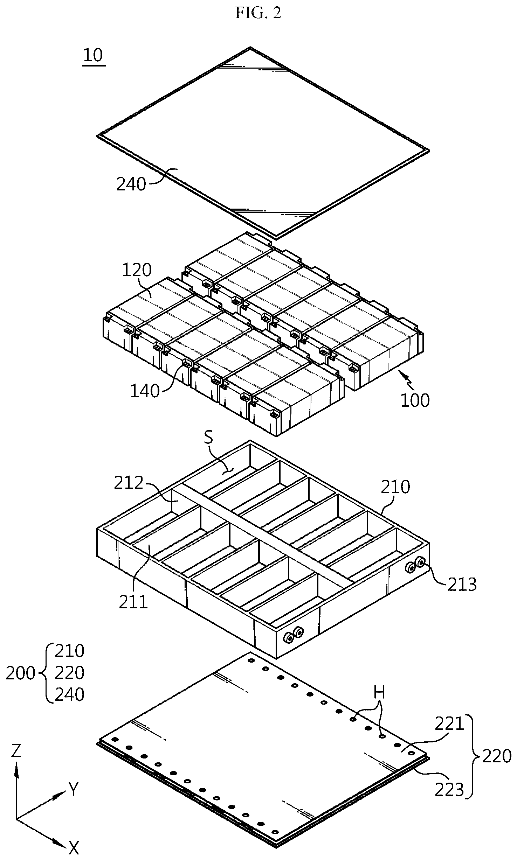

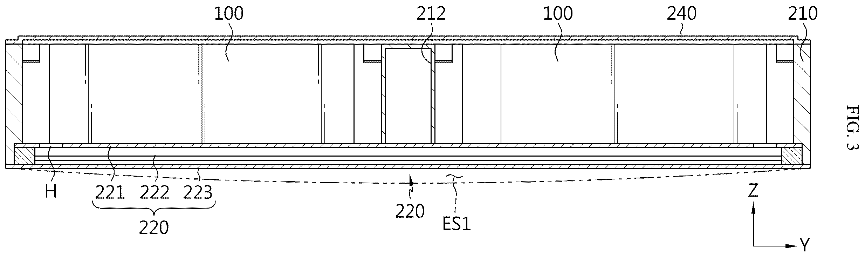

FIG. 1 is a perspective view of the entire battery pack according to an embodiment of the present disclosure, FIG. 2 is an exploded perspective view of primary components of the battery pack in FIG. 1, and FIG. 3 is a schematically cross-sectional view of a battery pack taken along line A-A' according to an embodiment of the present disclosure.

Referring to FIGS. 1 to 3, a battery pack 10 according to the present embodiment may include a plurality of battery modules 100 and a pack case 200 having an accommodation space S formed to accommodate the plurality of battery modules 100.

Referring to FIG. 2, the battery module 100 may include a plurality of battery cells (not shown). The battery cell includes a secondary battery including an electrode assembly, a pouch case that accommodates an electrolyte and the electrode assembly, and the like, and although the present embodiment will be described based on a pouch-type battery cell having a high energy density and easy to stack, it may also be applied to a cylindrical or prismatic secondary battery as the battery cell.

The pouch-type battery cell may include a pair of electrode leads (not shown) connected to the electrode assembly and extending outside the pouch case, thereby functioning as electrode terminals. The pair of electrode leads may extend forward and backward in the longitudinal direction. Alternatively, the pair of electrode leads may extend toward both ends of the battery cell, that is, in the longitudinal direction (+Y-axis direction). If necessary, the electrode leads may be positioned only at one end in the Y-axis direction, for example, at the end in the -Y-axis direction. Although not shown, electrical components such as a bus-bar, a bus-bar frame, and a module connector may be mounted adjacent to the pair of electrode leads of the battery cell.

The battery module 100 may include a module case 120 for accommodating the battery cells. The module case 120 is a component for accommodating one or more battery cells, and may be made of a metal material or a plastic material such as ABS resin, which has high rigidity and durability, in order to physically or chemically protect the accommodated battery cells. A terminal 140 of the battery module 100 may be provided on the front or rear side (both sides in the Y-axis direction) of the module case 120. The terminal 140 may be either a positive electrode or a negative electrode, and may be provided on both sides of the battery module 100, or may be disposed on only one side in some cases.

As shown in FIG. 2, the pack case 200 may accommodate the plurality of battery modules 100. To this end, the pack case 200 may have an accommodation space S formed therein to accommodate the plurality of battery modules 100. The battery modules 100 may be arranged in the width direction (X-axis direction) and the longitudinal direction (Y-axis direction) inside the accommodation space S of the pack case 200. Meanwhile, the pack case 200 is a component to protect the battery modules 100 from external impacts or the like, and may be made of a material having excellent mechanical strength (excluding the bottom surface of the pack case 200).

Referring to FIG. 2, the pack case 200 is illustrated as being separated into a pack frame 210 and a lower frame portion 220. As illustrated in the drawing, the pack case 200 may be provided by coupling the pack frame 210 and the lower frame portion 220 to each other, and accordingly, the bottom surface of the pack case 200 may be the upper surface of the lower frame portion 220.

As illustrated in FIG. 2 and FIG. 3, a plurality of lower venting holes H may be formed in the lower frame portion 220. The plurality of lower venting holes H may be provided at both ends of the battery module 100 in the longitudinal direction (Y-axis direction) and may be arranged parallel to the width direction (X-axis direction). One or more lower venting holes H may be provided for each of the plurality of battery modules 100.

Referring to FIG. 3, the accommodation space S of the pack case 200 and the inside of the lower frame portion 220 may communicate with each other through the lower venting holes H. Gaseous discharges including venting gases and solid discharges including electrode discharges may move through the lower venting holes H.

The pack case 200 may be configured such that at least one side of the pack case 200 is deformed when the internal pressure increases due to the venting gas and flame generated by a thermal event in the battery module 100. The pack case 200 may form an expansion space ES1 separate from the accommodation space S in response to the increase of the internal pressure. For example, the expansion space ES1 may be formed by deformation of the bottom surface (in the present embodiment, the bottom cover 223 described later) of the pack case 200 as illustrated in FIG. 3.

More specifically, the lower frame portion 220 may include a base plate 221, a bottom reinforcement bar 222, and a bottom cover 223, as will be described later, and when the internal pressure increases, the bottom cover 223 may be deformed in the pack case 200. That is, the venting gas and solid discharges generated in the accommodation space S may be discharged into the lower frame portion 220 through the lower venting holes H. Here, the expansion space ES1 may be the interior of the lower frame portion 220, which expands due to deformation of the bottom cover 223. Accordingly, if venting gas, flame, or the like is generated due to a thermal event so that the internal pressure of the battery pack 10 increases due to these discharges, a separate expansion space ES1 may be further formed in addition to the accommodation space S of the battery pack 10. Accordingly, the generated venting gas and solid discharges may be discharged to the expansion space ES1 formed by the deformation of the bottom cover 223 of the lower frame portion 220, as well as to the accommodation space S, thereby lowering the internal pressure of the battery pack 10 or reducing the increase rate of internal pressure. Since the thermal propagation speed decreases if the internal-pressure increase is relieved, according to the present disclosure, the thermal-propagation delay performance may be improved.

Hereinafter, the pack case 200 will be described in more detail.

Referring back to FIG. 2, the pack case 200 may include a pack frame 210 that accommodates the battery module 100 therein, a top cover 240 disposed on the top of the pack frame 210, and a lower frame portion 220 disposed on the bottom of the pack frame 210.

The pack frame 210 may be configured as a quadrangular frame. In addition, the pack frame 210 may be configured to have upper and lower openings. The top cover 240 may be disposed on the top of the pack frame 210, and the lower frame portion 220 may be disposed on the bottom. Accordingly, the pack frame 210 may form an accommodation space S for accommodating the battery module 100 therein.

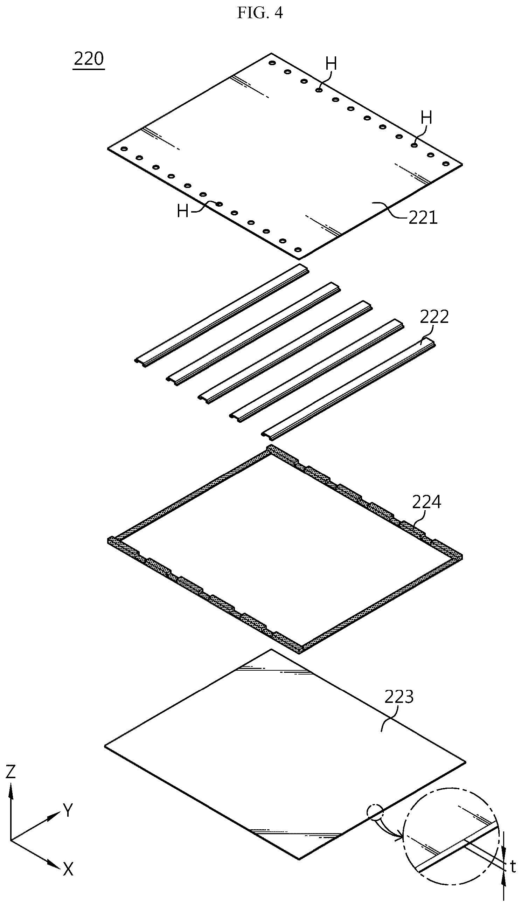

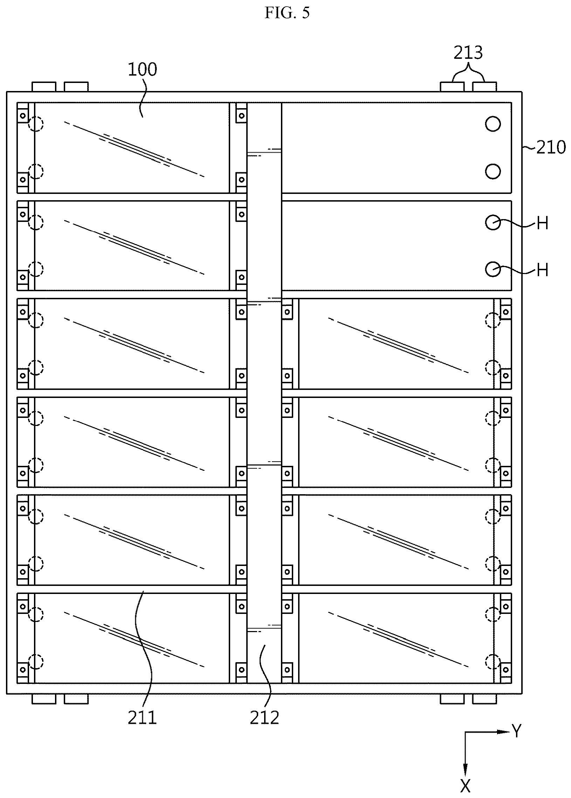

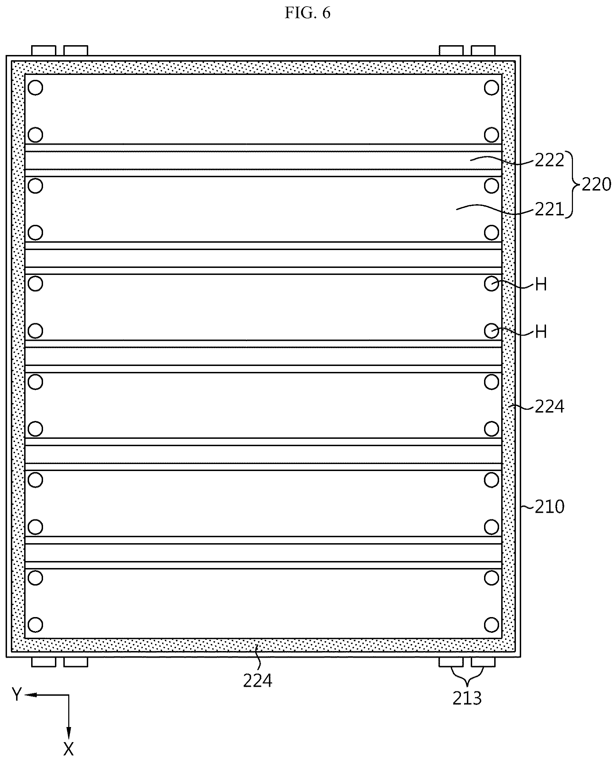

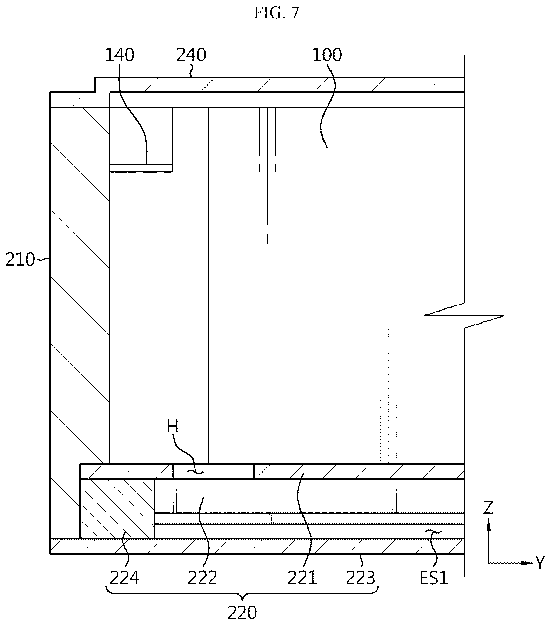

FIG. 4 is an exploded perspective view of a lower frame portion of the battery pack in FIG. 2, FIG. 5 is a top view of a battery pack from which a top cover is removed according to an embodiment of the present disclosure, FIG. 6 is a bottom view of a battery pack from which a bottom cover is removed according to an embodiment of the present disclosure, and FIG. 7 is an enlarged cross-sectional view of a battery pack according to an embodiment of the present disclosure.

Referring to FIGS. 4 to 7 together with FIGS. 2 and 3, the pack frame 210 has a horizontal partition 211 (in the Y-axis direction) and a vertical partition 212 (in the X-axis direction) that partition the interior of the pack frame 210. The horizontal partition 211 may be disposed in the longitudinal direction (Y-axis direction) and spaced apart by the width of the battery module 100. The vertical partition 212 may be disposed to extend from the center of the pack frame 210 in the width direction (X-axis direction) so as to separate the battery modules 100, which are adjacent in the longitudinal direction, from each other. In the present embodiment, five horizontal partitions 211 are provided and one vertical partition 212 is provided inside the pack frame 210, so that ten battery modules 100 are accommodated in the accommodation space S. Meanwhile, the scope of the present disclosure is not limited to the number of horizontal partitions 211 and vertical partitions 212 or to the number of battery modules 100 accommodated in the present embodiment.

A plurality of venting valves 213 may be provided on one side of the pack frame 210 in the width direction of the battery module 100. The venting valves 213 may be provided on both sides in the width direction (X-axis direction). The venting valves 213 may be provided so that the venting gas is discharged in the width direction (X-axis direction) of the battery module 100 (in the longitudinal direction in the case of a vehicle). The venting valves 213 may be operated so that the accommodation space S inside the pack case 200 may communicate with or may be isolated from the outside. The venting valves 213 may operate when the internal pressure reaches a preset pressure or more, which will be described in detail later in the description of operation.

Referring back to FIGS. 1 and 2, the top cover 240 may be disposed on the top of the pack frame 210, and the top cover 240 may be configured to seal the accommodation space S in which the battery modules 100 are accommodated. The top cover 240 in the present embodiment may be configured to completely cover ten battery modules 100.

Referring to FIGS. 4 to 7, the lower frame portion 220 is disposed on the bottom of the pack frame 210 to support the plurality of battery modules 100 seated thereon. The lower frame portion 220 may include a base plate 221 that is coupled to the pack frame 210 to support the battery module 100, a bottom reinforcement bar 222 provided between the bottom of the base plate 221 and the bottom cover 223, and a bottom cover 223 that is disposed on the bottom surface of the pack case 200 to cover the base plate 221.

The base plate 221 may be coupled to the bottom of the pack frame 210. Referring to FIG. 7, the base plate 221 may be coupled to a stepwise portion provided on the lower portion of the pack frame 210. The base plate 221 may form a bottom surface of the pack case 200 and may be provided in contact with the bottom of the plurality of battery modules 100 accommodated in the accommodation space S. Accordingly, the plurality of battery modules 100 may be stably seated and supported.

Meanwhile, although not shown in the drawing, a plurality of coolant flow paths may be provided on the bottom of the base plate 221, and the base plate 221 and a cooling system may be integrally configured. For example, the base plate 221 may be integrated with a heat sink.

A plurality of lower venting holes H may be formed at the edge of the base plate 221. The plurality of lower venting holes H may be arranged parallel to the width direction of the battery module 100. The plurality of lower venting holes H may be provided in a pair of lines on both sides of the battery module 100 in the longitudinal direction (Y-axis direction). One or more lower venting holes H may be disposed for each battery module 100. In the present embodiment, two lower venting holes H may be formed for each battery module 100 as shown in FIGS. 5 and 6. Venting gas and solid discharges including electrode discharges generated in the accommodation space S may move to the expansion space ES1 of the lower frame portion 220 through the lower venting holes H. Meanwhile, the arrangement of the plurality of lower venting holes H or the number of lower venting holes H for each battery module 100 is not limited to the present embodiment and may be variously changed.

Referring to FIG. 4, the bottom reinforcement bar 222 may be provided between the bottom of the base plate 221 and the bottom cover 223. The bottom reinforcement bar 222 may be provided to come into direct contact with the bottom of the base plate 221. The bottom reinforcement bar 222 may support the bottom of the base plate 221 to structurally reinforce the same, thereby preventing sagging or bending of the base plate 221. Referring to FIG. 4 and FIG. 6, a plurality of bottom reinforcement bars 222 may be provided. In addition, the bottom reinforcement bars 222 may be formed so as not to interfere with the plurality of lower venting holes H. Accordingly, the bottom reinforcement bars 222 do not hinder the flow of venting gas and solid discharges emitted through the lower venting holes H.

As shown in FIG. 4, a heat-resistant/fire-resistant gasket 224 may be interposed between the base plate 221 and the bottom cover 223. The heat-resistant/fire-resistant gasket 224 may be provided along the outer perimeters of the base plate 221 and the bottom cover 223. Specifically, the heat-resistant/fire-resistant gasket 224 may be disposed along the edge area of the base plate 221, as shown in FIG. 6, and may also be provided at both ends of the bottom reinforcement bar 222. Accordingly, as shown in FIG. 7, the heat-resistant/fire-resistant gasket 224 may seal the base plate 221, the bottom reinforcement bar 222, and the bottom cover 223, which are sequentially arranged from above, in the outer perimeter area where the bottom reinforcement bar 222 is disposed, and may seal the space between the base plate 221 and the bottom cover 223 in the outer perimeter area where the bottom reinforcement bar 222 is not disposed. The heat-resistant/fire-resistant gasket 224 may be made of a material having heat resistance and fire resistance. By providing this heat-resistant/fire-resistant gasket 224, the venting gas or solid discharges in the expansion space ES1, which is under high temperature or high pressure compared to the outside, may be prevented from randomly leaking out of the pack case 200.

The bottom cover 223 may be disposed on the bottom surface of the pack case 200 to cover the base plate 221. The bottom cover 223 may be disposed in contact with the lower end of the pack frame 210, as shown in FIG. 7, and may be disposed to be spaced a predetermined distance apart from the base plate 221 and the bottom reinforcement bar 222. Although not shown in the drawing, the bottom cover 223 may be bolted to the pack frame 210. Even when the bottom cover 223 is deformed due to the internal pressure increased by the venting gas and flame, the bottom cover 223 may be firmly fixed to the pack frame 210.

The bottom cover 223 may be configured to be plastically deformed and swell downward from the pack frame 210 when the internal pressure increases inside the accommodation space S. That is, the bottom cover 223 may be spaced apart from the base plate 221 or the bottom reinforcement bar 222 by a predetermined distance or more. In addition, the space formed by the spaced distance may form an expansion space ES1. In this case, the base plate 221 and the bottom reinforcement bar 222 do not undergo any deformation.

The bottom cover 223 may be made of steel or SUS (Stainless Use Steel). In addition, the thickness t of the bottom cover 223 may be less than that of the pack frame 210. The bottom cover 223 in the present embodiment may be configured to have a thickness of 1.6 mm to 2.5 mm. Accordingly, the bottom cover 223 may be easily deformed, and in particular, plastic deformation thereof may be possible, so that the expansion space ES1 may be formed inside the pack case 200 through the deformation. The bottom cover 223 may be deformed to form the expansion space ES1 while the base plate 221 and the bottom reinforcement bar 222 remain almost undeformed.

According to this implemented configuration, a separate expansion space ES1 may be further provided in addition to the existing accommodation space S so that the volume inside the pack case 200 capable of accommodating venting gas or the like may increase, so the venting gas and solid discharges may be distributed inside the expansion space ES1, thereby lowering the internal pressure or reducing the increase rate of internal pressure. Accordingly, the thermal energy may be effectively dispersed, thereby delaying chain thermal propagation to the neighboring battery modules 100 and preventing explosion of the entire battery pack 10.

**In** addition, according to the above-implemented configuration, solid discharges including electrode discharges may be collected and separated in the additional expansion space ES1 formed on the bottom of the battery pack 10, and only venting gas may be discharged to the outside, thereby minimizing the clogging of the venting valve 213. That is, the venting valve 213 may be operated when the internal pressure reaches a preset pressure or more after the expansion space ES1 is formed by deformation of the bottom cover 223, and the venting valve 213 may be configured to discharge only the venting gas.

Furthermore, according to the implemented configuration, the venting gas or flame may be effectively prevented from heading to the upper side of the battery pack 10 in a situation such as thermal runaway. In particular, in the case where the passenger is located above the battery pack 10, such as in an electric vehicle, the above-implemented configuration may suppress or delay gas or flame from moving toward the passenger. In addition, it may be free from the structure of the layout or other restrictions that may be required to mount the battery pack 10 to the vehicle while ensuring the safety of the upper side of the battery pack 10.

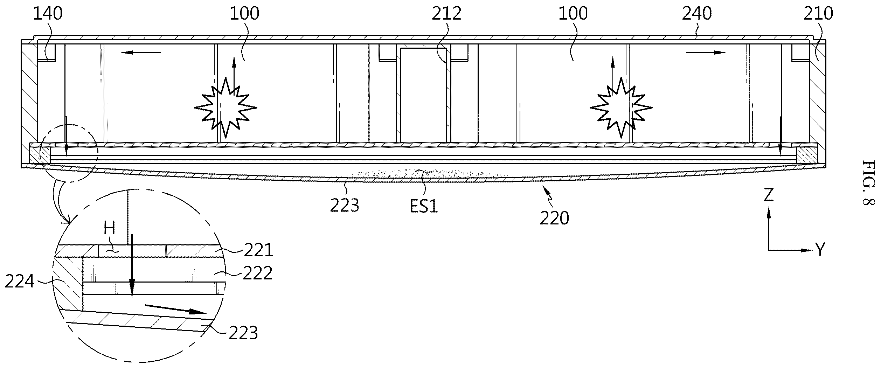

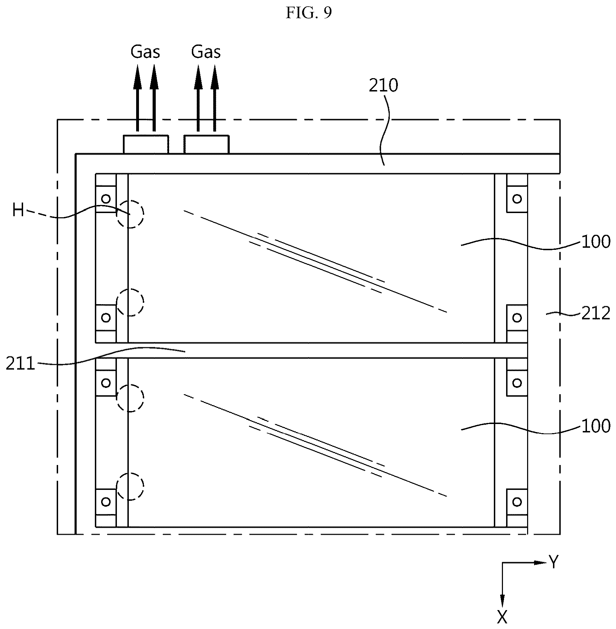

FIG. 8 is a schematic diagram illustrating a state in which a bottom cover is deformed in a battery pack according to an embodiment of the present disclosure, and FIG. 9 is a schematic diagram illustrating a state in which venting gas is discharged through a venting valve from a battery pack according to an embodiment of the present disclosure.

Hereinafter, a process in which the venting gas is easily discharged to the outside according to the present embodiment will be described in detail with reference to FIGS. 1 to 9.

First, if a thermal event occurs in a specific battery module 100 in FIG. 8, the internal pressure increases in the accommodation space S, and a large amount of venting gas and solid discharges are generated in the accommodation space S.

Next, the venting gas and solid discharges may be discharged into the lower frame portion 220 through the lower venting holes H. The venting gas or the like may enter the expansion space ES1 of the lower frame portion 220, and at this time, the heat-resistant/fire-resistant gasket 224 may completely seal the base plate 221 and the bottom cover 223 (see the arrows indicating the directions of movement of the venting gas or the like in the drawing).

Next, as the internal pressure increases in the accommodation space S, the bottom cover 223 is plastically deformed in response to the internal pressure. In this process, the gap between the bottom cover 223 and the base plate 221 increases and expands, so that a separate expansion space ES1 is formed in the lower frame portion 220.

Accordingly, the generated venting gas and solid discharges may be discharged into the expansion space ES1 as well as the accommodation space S. In particular, the solid discharges moving to the expansion space ES1 may be collected in the expansion space ES1. The solid discharges including electrode discharges are solid particles and heavier than the gaseous discharges, so they may be collected inside the expansion space ES1.

Finally, after the expansion space ES1 is formed, if the internal pressure reaches a preset pressure or more, the venting valve 213 operates as shown in FIG. 9. Only the venting gas in the accommodation space S and the expansion space ES1 is discharged to the outside of the pack case 200 through the venting valve 213. The discharge direction of the venting gas may be the width direction of the battery module 100. In addition, the solid discharges including electrode discharges remain in the collected state inside the expansion space ES1 by their own weight.

According to the above operations, the internal pressure of the battery pack 10 may be lowered or the increase rate of internal pressure may be reduced. Accordingly, the thermal energy may be effectively dispersed, so that the chain thermal propagation to the neighboring battery modules 100 may be delayed.

In addition, since the solid discharges including electrode discharges are collected and separated by the additional expansion space ES1 formed on the bottom of the battery pack 10, and since only the venting gas is discharged to the outside, the clogging of the venting valve 213 may be minimized.

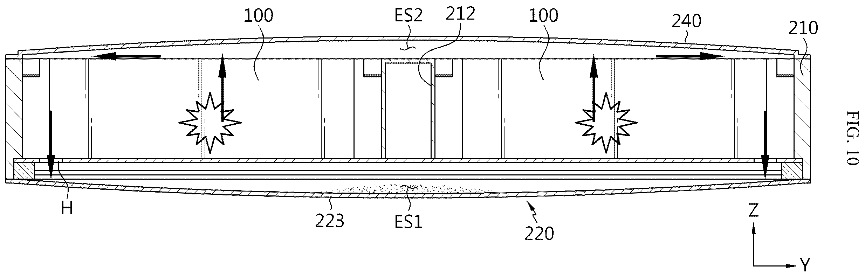

Subsequently, other embodiments of the battery pack 10 of the present disclosure will be briefly described with reference to FIG. 10.

FIG. 10 is a schematically cross-sectional view of a battery pack according to another embodiment of the present disclosure.

The same reference numerals as those in the previous drawings represent the same members, and redundant descriptions of the same members will be omitted, and the description will be made based on differences from the above-described embodiment.

The pack case 200 is provided with a top cover 240 on the top, and although not shown in the drawing, the top cover 240 is bolted to the top of the pack frame 210. In this case, a joining member may be disposed along the perimeter of the top cover 240 so as to be coupled to the pack frame 210. In addition, the central area of the top cover 240 and the vertical partition 212 of the pack frame 210 are not coupled.

The pack case 200 may have an expansion space separate from the accommodation space S in response to the increase in internal pressure, and an expansion space ES2 may be provided by the deformation of the top surface of the pack case 200 in addition to the expansion space ES1 formed by the deformation of the bottom surface of the pack case 200 in the previous embodiment.

Specifically, the top cover 240 may be configured to be plastically deformed when the internal pressure increases and may swell upward from the pack case 200. Accordingly, the expansion space ES2 may be formed by the deformation of the top cover 240 of the pack case 200. As described above, the expansion space ES2 formed on the top of the pack case 200 may communicate with the accommodation space S of the pack case 200, and may communicate with the expansion space ES1 formed by the deformation of the bottom surface of the pack case 200 through the lower venting holes H.

In the present embodiment, the top cover 240 may be made of aluminum or SUS to facilitate plastic deformation. The top cover 240, like the bottom cover 223, may be configured to have a thickness of 1.6 mm to 2.5 mm.

According to this configuration, when a thermal event occurs, venting gas and solid discharges may be discharged and may move upward from the accommodation space S (see the bold arrows in the Z-axis direction in the drawing) to primarily expand the top cover 240 to form an expansion space ES2. In addition, the venting gas and solid discharges may move to both sides in the drawing (see the bold arrows in the +Y-axis direction and the bold arrows in the -Z-axis direction in the drawing) to secondarily expand the bottom cover 223 through the lower venting holes H to form an expansion space ES1. Since the top cover 240 is deformed to form the expansion space ES2 on the top of the pack case 200, there is an advantage that the movement of the generated venting gas or the like is facilitated. In addition, compared to the above-described embodiment, since the expansion space ES2 is further provided, there is also an advantage that the extra space capable of accommodating the venting gas or the like increases.

Meanwhile, the order in which the expansion spaces ES1 and ES2 are formed is not limited to what is described herein, and the bottom cover 223 may be deformed to preferentially form the expansion space ES1 on the bottom of the pack case 200, and then the top cover 240 may be deformed to form the expansion space ES2 at the top of the pack case 200, or the expansion spaces ES1 and ES2 may be simultaneously formed on the top and bottom of the pack case 200.

According to this implemented configuration, the expansion spaces ES1 and ES2 are formed on the top and bottom surfaces of the pack case 200, respectively, so that the internal pressure increased by the thermal event may be further lowered or the increase rate of internal pressure may be further reduced, and the thermal energy may be effectively dispersed, thereby delaying the chain thermal propagation to the neighboring battery modules 100. In particular, in response to the increase in the internal pressure of the battery pack 10, the top cover 240 may also be plastically deformed to form the additional expansion space ES2 in addition to the accommodation space S and the expansion space ES1 formed by the deformation of the bottom cover 223, so that the internal pressure of the battery pack 10 may be further reduced or the increase rate of internal pressure may be further reduced.

In addition, the solid discharges including electrode discharges may be collected and separated by the additional expansion space ES1 formed on the bottom of the battery pack 10, and only the venting gas may be discharged to the outside, so that the clogging of the venting valve 213 (see FIG. 9) may be minimized.

Meanwhile, the battery pack 10 according to the present disclosure, although not shown, may further include various devices for controlling the charging and discharging of the battery modules 100, such as a BMS (Battery Management System), a current sensor, a fuse, or the like.

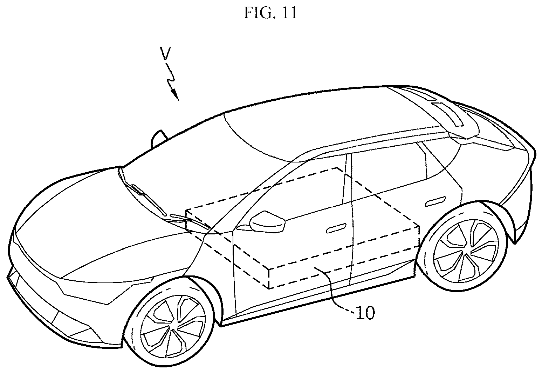

FIG. 11 is a diagram illustrating a vehicle according to an embodiment of the present disclosure.

Referring to FIG. 11, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the body frame or trunk space under the vehicle seat, and the battery pack 10 may be installed in a reversed order when installed in the vehicle, as needed.

Meanwhile, although terms indicating directions such as upward, downward, left, right, front, and back are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

**[Description of Reference numerals]**

| | | | |
|---|---|---|---|
| V: | Vehicle | 10: | Battery pack |
| 100: | Battery module | 120: | Module case |
| 140: | Terminal | 200: | Pack case |
| S: | Accommodation space | 210: | Pack frame |
| 211: | Horizontal partition | 212: | Vertical partition |
| 213: | Venting valve | 220: | Lower frame portion |
| ES1,ES2: | Expansion space | 221: | Base plate |
| H: | Lower venting hole | 222: | Bottom reinforcement bar |
| 223: | Bottom cover | 224: | Heat-resistant/fire-resistant gasket |
| 240: | Top cover | | |

## Claims

1. A battery pack comprising:
a plurality of battery modules; and
a pack case having an accommodation space formed to accommodate the plurality of battery modules,
wherein the pack case is configured such that at least one surface of the pack case is deformed when internal pressure increases due to venting gas and flame generated due to a thermal event in the battery module.

2. The battery pack of claim 1,
wherein the pack case has an expansion space formed to be separate from the accommodation space in response to an increase in the internal pressure.

3. The battery pack of claim 2,
wherein the expansion space is formed by deformation of a bottom surface of the pack case.

4. The battery pack of claim 2,
wherein the pack case comprises:
a pack frame configured to have upper and lower openings and accommodate the battery modules therein; and
a lower frame portion disposed at a bottom of the pack frame to support the plurality of battery modules seated thereon.

5. The battery pack of claim 4,
wherein the lower frame portion comprises:
a base plate coupled to the pack frame and configured to support the battery modules; and
a bottom cover disposed on the bottom surface of the pack case so as to cover the base plate.

6. The battery pack of claim 5,
wherein the bottom cover is configured to be plastically deformed and swell downward from the pack case when the internal pressure increases.

7. The battery pack of claim 5,
wherein the bottom cover is made of steel or SUS.

8. The battery pack of claim 5,
wherein the bottom cover is configured to have a thickness of 1.6 mm to 2.5 mm.

9. The battery pack of claim 5,
wherein the base plate has a plurality of lower venting holes through which the venting gas and solid discharges including electrode discharges move to the expansion space.

10. The battery pack of claim 5,
wherein a heat-resistant/fire-resistant gasket is interposed between the base plate and the bottom cover.

11. The battery pack of claim 9,
wherein the pack frame has a plurality of venting valves provided along a width direction of the battery module.

12. The battery pack of claim 11,
wherein the venting valve is configured to operate when the internal pressure reaches a preset pressure or more after the bottom cover is deformed to form the expansion space.

13. The battery pack of claim 9,
wherein the expansion space is formed by deformation of a top surface and a bottom surface of the pack case, and
wherein an expansion space formed by deformation of the top surface of the pack case and an expansion space formed by deformation of the bottom surface of the pack case communicate with each other through the lower venting hole.

14. The battery pack of claim 13,
wherein the pack case further comprises a top cover disposed on the top of the pack frame so as to seal the accommodation space in which the battery modules are accommodated,
wherein the bottom cover is configured to be plastically deformed and swell downward from the pack case when the internal pressure increases, and
wherein the top cover is configured to be plastically deformed and swell upward from the pack case when the internal pressure increases.

15. A vehicle comprising a battery pack according to claim 1 to 14.
